# EUROPÄISCHE PATENTSCHRIFT

(11) **EP 3 119 641 B1**
(45) Veröffentlichungstag und Bekanntmachung des Hinweises auf die Patenterteilung: **18.10.2017**
(21) Anmeldenummer: 15711119.6
(22) Anmeldetag: 17.03.2015
(51) Int. Cl.: B60N 2/20, B60N 2/30, B60N 2/22

(54) **VERBINDUNGSANORDNUNG FÜR EIN GESTÄNGE EINES FAHRZEUGSITZES UND FAHRZEUGSITZ**
CONNECTION ASSEMBLY FOR LINKAGE OF A VEHICLE SEAT AND VEHICLE SEAT
AGENCEMENT DE LIAISON POUR LIAISON PIVOTANTE D'UN SIÈGE DE VÉHICULE ET SIÈGE DE VÉHICULE

(30) Priorität: 20.03.2014 DE 102014205174; 28.04.2014 DE 102014207975
(43) Veröffentlichungstag der Anmeldung: 25.01.2017
(73) Patentinhaber: Adient Luxembourg Holding S.à r.l., 2453 Luxembourg (LU)
(72) Erfinder: WOLF, Christian, 67811 Dielkirchen (DE); PLUTA, Wolfgang, 67699 Heiligenmoschel (DE); HAMMAN, Heinrich, 67806 Teschenmoschel (DE); ENNS, Viktor, 67663 Kaiserslautern (DE); DILL, Thomas, 67699 Heiligenmoschel (DE)
(74) Vertreter: Liedhegener, Ralf
(86) Internationale Anmeldenummer: PCT/EP2015/055498
(87) Internationale Veröffentlichungsnummer: WO 2015/140135

(56) Entgegenhaltungen:
- DE-A1- 2 339 536
- DE-A1- 3 505 586

## Beschreibung

Die Erfindung betrifft eine Verbindungsanordnung für ein Gestänge eines Fahrzeugsitzes mit den Merkmalen des Oberbegriffs des Anspruchs 1 sowie einen Fahrzeugsitz mit den Merkmalen des Anspruchs 15.

### Stand der Technik

Eine gattungsgemäße Verbindungsanordnung für ein Gestänge umfasst eine Koppelstange, welche an einem anderen Bauteil zu befestigen ist. Dabei muss die Koppelstange in einer genau definierten Lage an dem anderen Bauteil befestigt werden. Zur Sicherung und Fixierung der Koppelstange ist ein Sicherungselement vorgesehen. Bauteilbedingte Toleranzen, insbesondere der Länge der Koppelstange, sind bei der Befestigung auszugleichen.

Durch Benutzung sind Koppelstangen bekannt, welche entlang ihrer Längsachse zueinander versetzte Nuten aufweisen. Bei der Befestigung der Koppelstange wird eine einseitig offene Sicherungsscheibe als Sicherungselement in eine der Nuten eingesetzt. Ein Toleranzausgleich ist dann innerhalb eines Rasters möglich, welches durch den Abstand der Nuten zueinander vorgegeben ist.

Ferner ist es bekannt, eine Sicherungsscheibe, welche eine zentrale Öffnung aufweist, als Sicherungselement auf die Koppelstange in Richtung ihrer Längsachse aufzuschieben. Das Aufschieben einer solchen Sicherungsscheibe ist jedoch nur möglich, wenn ein Ende der Koppelstange frei zugänglich ist. Ferner kann eine derartige Verbindungsanordnung nur Kräfte in eine Richtung aufnehmen.

Auch ist es bekannt, die Koppelstange mit einem Gewinde zu versehen, auf welches eine Sicherungsmutter als Sicherungselement aufgeschraubt wird. Das Aufschrauben einer solchen Sicherungsmutter ist ebenfalls nur möglich, wenn ein Ende der Koppelstange frei zugänglich ist. Auch ist der Einstellvorgang dabei relativ aufwendig.

Auch sind Koppelstangen bekannt, welche aus zwei Teilen bestehen, die jeweils mit einem Außengewinde versehen sind. Dabei weist ein Teil ein als Rechtsgewinde ausgeführtes Außengewinde und das andere Teil ein als Linksgewinde ausgeführtes Außengewinde auf. Durch Drehen eines Spannschlosses, welches das Sicherungselement darstellt, und welches ein als Rechtsgewinde ausgeführtes Innengewinde und ein in Richtung seiner Längsachse versetztes als Linksgewinde ausgeführtes Innengewinde aufweist, kann der Abstand der beiden Teile zueinander eingestellt werden. Der Einstellvorgang ist ebenfalls relativ aufwendig.

Eine gattungsgemässe Verbindung für ein Gestänge eines Fahrzeugsitzes ist dem Dokument DE2339536A1 zu entnehmen. Aufgabe Der Erfindung liegt die Aufgabe zu Grunde, eine Verbindungsanordnung für ein Gestänge eines Fahrzeugsitzes der eingangs genannten Art zu verbessern, insbesondere den Einstellvorgang zu vereinfachen, sowie einen entsprechenden Fahrzeugsitz bereitzustellen.

### Lösung

Diese Aufgabe wird erfindungsgemäß durch eine Verbindungsanordnung für ein Gestänge eines Fahrzeugsitzes mit den Merkmalen des Anspruches 1 gelöst.

Vorteilhafte Ausgestaltungen, welche einzeln oder in Kombination miteinander eingesetzt werden können, sind Gegenstand der Unteransprüche.

Eine gattungsgemäße Verbindungsanordnung für ein Gestänge eines Fahrzeugsitzes umfasst eine Koppelstange und ein Sicherungselement zur Sicherung der Koppelstange an einem weiteren Bauteil des Fahrzeugsitzes. Unter Sicherung ist dabei insbesondere eine Befestigung in Erstreckungsrichtung der Koppelstange an dem weiteren Bauteil zu verstehen.

Erfindungsgemäß ist die Koppelstange in eine mit dem weiteren Bauteil verbindbare Lagerbuchse eingeführt, welche einen Hohlraum aufweist, in welchen das Sicherungselement eingeführt ist.

Durch die erfindungsgemäße Ausgestaltung ist die Montage der Verbindungsanordnung vorteilhaft vereinfacht. Auch muss kein Ende der Koppelstange frei zugänglich sein. Die Montage ist verhältnismäßig schnell, einfach und fehlerfrei möglich. Insbesondere ist kein aktives Einstellen erforderlich, insbesondere, wenn die Position des weiteren Bauteils durch einen Anschlag definiert ist. Weiterhin wird für die Montage kein besonderes Spezialwerkzeug benötigt.

Toleranzen, insbesondere eine fertigungsbedingte Toleranz der Länge der Koppelstange, sind verhältnismäßig genau ausgleichbar.

Die Anzahl der benötigten Bauteile für die Verbindungsanordnung ist verhältnismäßig gering.

Gemäß einer vorteilhaften Weiterbildung der Erfindung weist die Lagerbuchse einen topfartigen Bereich auf. Dadurch ist die Lagerbuchse in eine kreisrunde Durchführöffnung des weiteren Bauteils, insbesondere eines Hebels oder eines Blechs, einführbar und relativ zu dem Hebel oder dem Blech drehbar. Eine zerstörungsfreie Demontage der Verbindungsanordnung ist auch möglich.

Der topfartige Bereich besitzt insbesondere eine annähernd rotationssymmetrische Kontur.

Vorteilhaft umschließt der topfartige Bereich den Hohlraum, in welchen das Sicherungselement eingeführt ist, weitgehend.

Vorteilhaft weist die Lagerbuchse eine Aufnahmeöffnung auf, welche sich von einer Mantelfläche des topfartigen Bereichs bis zu dem Hohlraum erstreckt, und in welche die Koppelstange eingeführt ist.

Gemäß einer vorteilhaften Ausgestaltung der Erfindung weist eine Stirnseite des topfartigen Bereichs eine Einführöffnung auf, in welche das Sicherungselement eingeführt ist. Dadurch ist das Sicherungselement verhältnismäßig einfach in die Lagerbuchse einführbar.

Gemäß einer vorteilhaften Weiterbildung der Erfindung ist eine Stirnseite des topfartigen Bereichs von einem in radialer Richtung nach außen ragenden Flansch umgeben. Wenn die Lagerbuchse in eine Durchführöffnung des weiteren Bauteils, insbesondere eines Hebels oder eines Blechs, eingeführt ist, verhindert der Flansch eine Verschiebung der Lagerbuchse in axialer Richtung.

Vorzugsweise ist an einer Mantelfläche des topfartigen Bereichs mindestens ein in radialer Richtung nach außen ragender Vorsprung angeordnet, welcher ebenfalls eine Verschiebung der Lagerbuchse relativ zu dem weiteren Bauteil, insbesondere dem Hebel oder dem Blech, in axial entgegengesetzter Richtung verhindert.

Vorteilhaft schließen der Flansch und der Vorsprung das weitere Bauteil, insbesondere das Blech oder den Hebel, zwischen sich ein. Somit ist die Lagerbuchse in axialer Richtung an dem weitern Bauteil gesichert.

Gemäß einer bevorzugten Ausgestaltung der Erfindung ist an einem Endbereich der Koppelstange ein Außengewinde angebracht, welches zumindest teilweise in den Hohlraum ragt. Durch das Außengewinde ist eine formschlüssige Verbindung der Koppelstange zu dem Sicherungselement möglich. Ferner ist durch eine Rotation der Koppelstange eine zusätzliche Feineinstellung der Verbindungsanordnung sowie des Gestänges möglich.

Anstelle eines Außengewindes mit einer Steigung kann die Koppelstange auch eine Riffelung, eine Verzahnung oder Nuten aufweisen.

Dazu weist das Sicherungselement vorzugsweise mindestens zwei Zähne auf, welche in das Außengewinde der Koppelstange, insbesondere formschlüssig, eingreifen. Nach der Montage wirken die Zähne mit dem Außengewinde der Koppelstange in der Art einer Schraubverbindung zusammen.

Besonders vorteilhaft weist das Sicherungselement drei Zähne auf, welche in das Außengewinde der Koppelstange, insbesondere formschlüssig, eingreifen.

Vorteilhaft besteht die Lagerbuchse aus Kunststoff. Dadurch sind unerwünschte Geräusche sowie Materialbeanspruchungen bei einer Bewegung der Lagerbuchse relativ zu dem Hebel vermieden.

Die Aufgabe wird auch durch einen Fahrzeugsitz mit den Merkmalen des Anspruchs 15 gelöst, welcher mindestens eine erfindungsgemäße Verbindungsanordnung aufweist.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine Explosionsdarstellung einer Verbindungsanordnung für ein Gestänge,

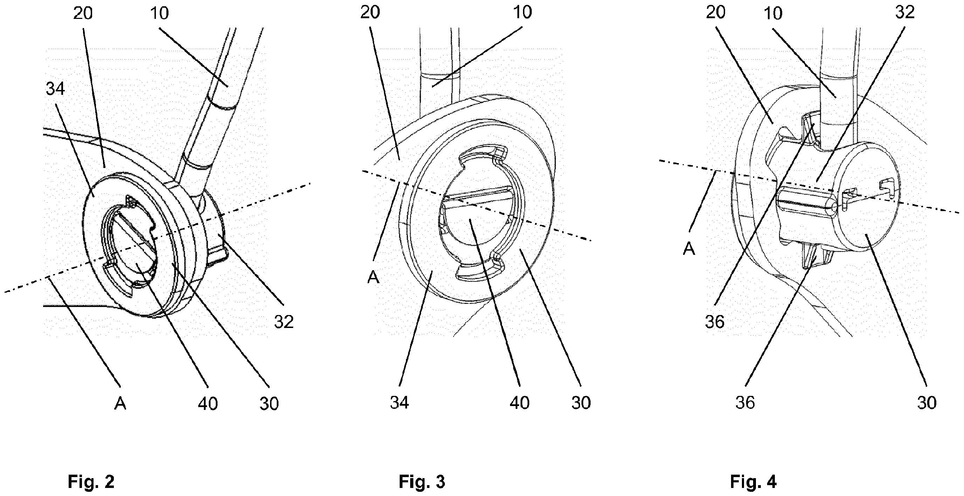

- Fig. 2:: eine perspektivische Darstellung der Verbindungsanordnung aus Fig. 1 im montierten Zustand,
- Fig. 3:: eine weitere perspektivische Darstellung der Verbindungsanordnung aus Fig. 1 im montierten Zustand und
- Fig. 4:: eine weitere perspektivische Darstellung der Verbindungsanordnung aus Fig. 1 im montierten Zustand.

Eine Verbindungsanordnung 1 für ein Gestänge eines Fahrzeugsitzes umfasst eine Koppelstange 10, eine Lagerbuchse 30 und ein Sicherungselement 40, welches vorliegend in Form einer Klammer ausgestaltet ist. Die Verbindungsanordnung 1 dient dazu, die Koppelstange 10 mit einem weiteren Bauteil, insbesondere einem schwenkbaren Hebel, zu verbinden.

Bei dem Gestänge kann es sich, wie vorliegend, um einen Teil eines Hebelgetriebes zur Bedienung einer Komponente des Fahrzeugsitzes handeln. Das Gestänge kann aber beispielsweise auch Teil einer fachwerkartigen, statischen Struktur des Fahrzeugsitzes sein.

Die Koppelstange 10 ist stabförmig ausgestaltet und weist einen annähernd kreiszylindrischen Querschnitt auf. An einem ersten Endbereich der Koppelstange 10 ist ein Außengewinde 12 angebracht. Die Koppelstange 10 ist an ihrem ersten Endbereich mit einem weiteren Bauteil des Fahrzeugsitzes verbunden, welches vorliegend ein schwenkbarer Hebel 20 ist. Ein dem ersten Endbereich gegenüberliegender zweiter Endbereich der Koppelstange 10 ist vorliegend mit einem nicht dargestellten Beschlag des Fahrzeugsitzes verbunden. Vorliegend besteht die Koppelstange 10 aus Metall.

Durch Schwenken des Hebels 20 um eine Schwenkachse wird die Koppelstange 10 bewegt und öffnet dadurch den Beschlag. Dabei wirkt die Koppelstange 10 als Zugstange und erfährt eine translatorische Bewegung entlang ihrer Längsachse ebenso wie eine leichte Drehbewegung um eine Drehachse A relativ zu dem Hebel 20.

Der Hebel 20 ist vorliegend als flaches Blechteil ausgestaltet und besteht aus Metall. Der Hebel 20 weist eine Durchführöffnung 25 auf, welche ein zentrales Loch und zwei Randzonen aufweist. Das zentrale Loch ist als kreisrunde Öffnung ausgeführt. Die Randzonen erstecken sich von einer Umfangslinie der kreisrunden Öffnung nach außen und sind diametral gegenüberliegend angeordnet.

Die Lagerbuchse 30 hat eine annähernd rotationssymmetrische Kontur. Vorliegend besteht die Lagerbuchse 30 aus Kunststoff. Die Mittelachse der Lagerbuchse 30 definiert ein Zylinderkoordinatensystem, auf welches nachfolgend Bezug genommen wird. Vorliegend fluchtet die Mittelachse der Lagerbuchse 30 mit der Drehachse A.

Die Lagerbuchse 30 umfasst einen topfartigen Bereich 32, welcher annähernd hohlzylindrisch und rotationssymmetrisch ausgestaltet ist und eine Mantelfläche aufweist. Der Außendurchmesser des topfartigen Bereichs 32 der Lagerbuchse 30 entspricht etwa dem Durchmesser des zentralen Lochs der Durchführöffnung 25 des Hebels 20. Dabei ist eine erste Stirnseite des topfartigen Bereichs 32 geschlossen. Eine zweite, der ersten Stirnseite gegenüberliegende, Stirnseite weist eine Einführöffnung 35 auf. Der topfartige Bereich 32 umschließt einen Hohlraum 31 der Lagerbuchse 30.

Die Einführöffnung kann in einer Abwandlung des Ausführungsbeispiels auch an der Mantelfläche des topfartigen Bereichs 32 angeordnet sein.

Die zweite Stirnseite des topfartigen Bereichs 32, welche die Einführöffnung 35 aufweist, ist von einem Flansch 34 umgeben. Der Flansch 34 weist in radialer Richtung eine größere Ausdehnung auf als der topfartige Bereich 32.

In radialer Richtung von der Mantelfläche des topfartigen Bereichs 32 abstehend sind Vorsprünge 36 vorgesehen. Vorliegend weist der topfartige Bereich 32 zwei solche Vorsprünge 36 auf, welche diametral gegenüberliegend an der Mantelfläche des topfartigen Bereichs 32 angeordnet sind und sich in radialer Richtung annähernd gleich weit wie der Flansch 34 erstrecken.

Der topfartige Bereich 32 weist ferner eine Aufnahmeöffnung 37 auf. Die Aufnahmeöffnung 37 verläuft von der Mantelfläche des topfartigen Bereichs 32 in radialer Richtung bis zu dem Hohlraum 31 der Lagerbuchse 30. Vorliegend ist die Aufnahmeöffnung 37 als kreisrunde Bohrung ausgeführt, wobei der Durchmesser der Aufnahmeöffnung 37 annähernd dem Außendurchmesser der Koppelstange 10 entspricht.

Das Sicherungselement 40 ist vorliegend als flaches Blechteil ausgestaltet und besteht aus Metall. Das Sicherungselement 40 ist annähernd spiegelsymmetrisch ausgebildet und weist eine Breite auf, welche annähernd der Breite der Einführöffnung 35 der Lagerbuchse 30 entspricht. Unter der Breite des Sicherungselements 40 ist dabei dessen Ausdehnung senkrecht zu seiner Symmetrieebene zu verstehen.

Das Sicherungselement 40 weist eine Halteöffnung 45 auf, welche als annähernd kreisrundes Loch ausgeführt ist. Der Durchmesser der Halteöffnung 45 entspricht annähernd dem Außendurchmesser der Koppelstange 10, beziehungsweise dem Kerndurchmesser des Außengewindes 12, sowie dem Durchmesser der Aufnahmeöffnung 37 der Lagerbuchse 30.

Das Sicherungselement 40 weist einen Durchbruch 47 auf, welcher sich von einem Randbereich des Sicherungselements 40 bis zu der Halteöffnung 45 erstreckt. Der Durchbruch 47 ist annähernd trichterförmig ausgebildet, wobei eine Schmalseite in die Halteöffnung 45 übergeht und eine Breitseite einen Randbereich des Sicherungselements 40 öffnet. Das Sicherungselement 40 weist somit zwei Zähne 42 auf, welche die Halteöffnung 45 und den Durchbruch 47 zwischen sich aufnehmen.

Vorliegend weist das Sicherungselement 40 noch einen dritten Zahn auf, der in den Figuren nicht sichtbar ist. Der dritte Zahn ist an einem dem Durchbruch 47 gegenüberliegenden Rand der Halteöffnung 45 angeordnet und ragt in die Halteöffnung 45 hinein.

Bei der Montage des Gestänges wird zunächst die Lagerbuchse 30 mit dem Hebel 20 verbunden. Dazu wird der topfartige Bereich 32 der Lagerbuchse 30 in axialer Richtung in die Durchführöffnung 25 des Hebels 20 eingeführt. Die Vorsprünge 36 der Lagerbuchse 30 fluchten dabei mit den Randzonen der Durchführöffnung 25 des Hebels 20. Wenn der Flansch 34 der Lagerbuchse 30 an dem Hebel 20 anliegt wird die Lagerbuchse 30 relativ zu dem Hebel 20 um die Drehachse A gedreht bis die Vorsprünge 36 der Lagerbuchse 30 von den Randzonen der Durchführöffnung 25 entfernt sind und auch an dem Hebel 20 anliegen. Der Flansch 34 und die Vorsprünge 36 umschließen nun den Hebel 20 in axialer Richtung. Somit ist die Lagerbuchse 30 in axialer Richtung formschlüssig mit dem Hebel 20 verbunden.

Anschließend wird das Außengewinde 12 der Koppelstange 10 in die Aufnahmeöffnung 37 der Lagerbuchse 30 eingeführt. Das Außengewinde 12 der Koppelstange 10 ragt danach zumindest teilweise in den Hohlraum 31 der Lagerbuchse 30 hinein.

Zum Einstellen des Gestänges, vorliegend des Hebelgetriebes, wird danach der Hebel 20 derart um seine Schwenkachse geschwenkt bis er seine Sollposition eingenommen hat. Beim Schwenken des Hebels 20 um seine Schwenkachse bewegt sich die Lagerbuchse 30 relativ zu der Koppelstange 10. Dadurch ändert sich die Eintauchtiefe des Außengewindes 12 der Koppelstange 10 in den Hohlraum 31 der Lagerbuchse 30.

Durch den Einstellvorgang, also durch das Schwenken des Hebels 20 in seine Sollposition, werden Toleranzen, insbesondere eine fertigungsbedingte Toleranz der Länge der Koppelstange 10, ausgeglichen.

Nach erfolgter Einstellung des Gestänges, vorliegend des Hebelgetriebes, wird die Koppelstange 10 mittels des Sicherungselements 40 an der Lagerbuchse 30 fixiert. Dazu wird das Sicherungselement 40 mit den Zähnen 42 voran derart in axialer Richtung in die Einführöffnung 35 der Lagerbuchse 30 eingeschoben, dass die Zähne 42 sowie der dritte Zahn formschlüssig in das Außengewinde 12 der Koppelstange 10 eingreifen.

Das Außengewinde 12 der Koppelstange 10 durchragt somit die Halteöffnung 45 des Sicherungselements 40. Die Zähne 42 sowie der dritte Zahn am Rand der Halteöffnung 45 des Sicherungselements 40 umgreifen dabei einen Gewindegang des Außengewindes 12 der Koppelstange 10 formschlüssig und kraftschlüssig. Die Koppelstange 10 ist somit in radialer Richtung, welche der Richtung der Längsachse der Koppelstange 10 entspricht, in der Lagerbuchse 30 gesichert.

Die Zähne 42 sowie der dritte Zahn erfahren dabei eine Biegung in Richtung der Längsachse der Koppelstange 10. Dadurch ergibt sich eine zusätzliche Verstärkung der Verbindungsanordnung 1 in Richtung der Längsachse der Koppelstange 10.

Gegebenenfalls und optional kann durch eine Rotation der Koppelstange 10 um ihre Längsachse noch eine zusätzliche Feineinstellung des Gestänges durchgeführt werden.

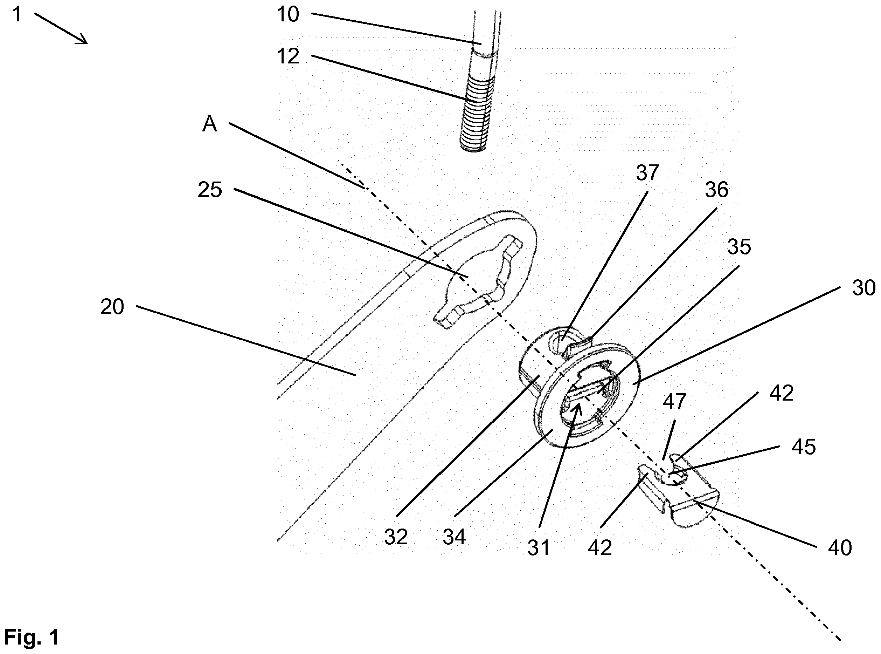

Beim Einschieben des Sicherungselements 40 in die Einführöffnung 35 der Lagerbuchse 30 erfahren die Zähne 42 des Sicherungselements 40 beim Auftreffen auf die Koppelstange 10 eine elastische Deformation. Beim weiteren Einschieben des Sicherungselements 40, wenn das Außengewinde 12 der Koppelstange 10 in der Halteöffnung 45 des Sicherungselements 40 anliegt, geht die elastische Deformation der Zähne 42 des Sicherungselements 40 zurück. Die Zähne 42 des Sicherungselements 40 nehmen dabei ihre ursprüngliche, in Fig. 1 gezeigte, Gestalt wieder an und greifen formschlüssig in das Außengewinde 12 der Koppelstange 10. Das Sicherungselement 40 ist dadurch in axialer Richtung in der Lagerbuchse 30 gesichert.

Es ist auch denkbar, dass das Sicherungselement 40 beim Einschieben in die Lagerbuchse 30 einen Materialteil der Lagerbuchse 30 in radialer Richtung nach außen drückt, so dass besagter Materialteil der Lagerbuchse 30 an dem Hebel 20 anliegt und die Lagerbuchse 30 in axialer Richtung sichert.

Die Lagerbuchse 30 ist im vorliegenden Ausführungsbeispiel um die Drehachse A drehbar an dem Hebel 20 gelagert. Die Koppelstange 10 ist mittels der Lagerbuchse 30 und des Sicherungselements 40 mit dem Hebel 20 verbunden.

### Bezugszeichenliste

- 1: Verbindungsanordnung
- 10: Koppelstange
- 12: Außengewinde
- 20: Hebel
- 25: Durchführöffnung
- 30: Lagerbuchse
- 31: Hohlraum
- 32: topfartiger Bereich
- 34: Flansch
- 35: Einführöffnung
- 36: Vorsprung
- 37: Aufnahmeöffnung
- 40: Sicherungselement
- 42: Zahn
- 45: Halteöffnung
- 47: Durchbruch
- A: Drehachse

## Patentansprüche

1. Verbindungsanordnung (1) für ein Gestänge eines Fahrzeugsitzes, umfassend eine Koppelstange (10) und ein Sicherungselement (40) zur Sicherung der Koppelstange (10) an einem weiteren Bauteil (20) des Fahrzeugsitzes, wobei das Gestänge ein Teil eines Hebelgetriebes zur Bedienung einer Komponente des Fahrzeugsitzes und das weitere Bauteil (20) ein schwenkbarer Hebel ist,
**dadurch gekennzeichnet, dass**
die Koppelstange (10) in eine mit dem weiteren Bauteil (20) verbindbare Lagerbuchse (30) eingeführt ist, welche einen Hohlraum (31) aufweist, in welchen das Sicherungselement (40) eingeführt ist.

2. Verbindungsanordnung (1) nach Anspruch 1, **dadurch gekennzeichnet, dass** die Lagerbuchse (30) einen topfartigen Bereich (32) aufweist.

3. Verbindungsanordnung (1) nach Anspruch 2, **dadurch gekennzeichnet, dass** der topfartige Bereich (32) eine annähernd rotationssymmetrischen Kontur aufweist.

4. Verbindungsanordnung (1) nach einem der Ansprüche 2 oder 3, **dadurch gekennzeichnet, dass** der topfartige Bereich (32) den Hohlraum (31) weitgehend umschließt,

5. Verbindungsanordnung (1) nach Anspruch 4, **dadurch gekennzeichnet, dass** die Lagerbuchse (30) eine Aufnahmeöffnung (37) aufweist, welche sich von einer Mantelfläche des topfartigen Bereichs (32) bis zu dem Hohlraum (31) erstreckt, und in welche die Koppelstange (10) eingeführt ist,

6. Verbindungsanordnung (1) nach einem der Ansprüche 4 oder 5, **dadurch gekennzeichnet, dass** eine Stirnseite des topfartigen Bereichs (32) eine Einführöffnung (35) aufweist, in welche das Sicherungselement (40) eingeführt ist.

7. Verbindungsanordnung (1) nach Anspruch 6, **dadurch gekennzeichnet, dass** eine Stirnseite des topfartigen Bereichs (32) von einem in radialer Richtung nach außen ragenden Flansch (34) umgeben ist.

8. Verbindungsanordnung (1) nach einem der Ansprüche 2 bis 7, **dadurch gekennzeichnet, dass** an einer Mantelfläche des topfartigen Bereichs (32) mindestens ein in radialer Richtung nach außen ragender Vorsprung (36) angeordnet ist.

9. Verbindungsanordnung (1) nach einem der Ansprüche 1 bis 8, **dadurch gekennzeichnet, dass** an einem Endbereich der Koppelstange (10) ein Außengewinde (12) angebracht ist, welches zumindest teilweise in den Hohlraum (31) ragt.

10. Verbindungsanordnung (1) nach Anspruch 9, **dadurch gekennzeichnet, dass** das Sicherungselement (40) mindestens zwei Zähne (42) aufweist, welche in das Außengewinde (12) eingreifen.

11. Verbindungsanordnung (1) nach Anspruch 10, **dadurch gekennzeichnet, dass** genau drei Zähne (42) vorgesehen sind.

12. Verbindungsanordnung (1) nach einem der Ansprüche 10 oder 11, **dadurch gekennzeichnet, dass** die Zähne (42) formschlüssig in das Außengewinde (12) eingreifen.

13. Verbindungsanordnung (1) nach einem der Ansprüche 1 bis 7, **dadurch gekennzeichnet, dass** die Koppelstange an einem Endbereich eine Riffelung oder eine Verzahnung oder Nuten aufweist.

14. Verbindungsanordnung (1) nach einem der Ansprüche 1 bis 12, **dadurch gekennzeichnet, dass** die Lagerbuchse (30) aus Kunststoff besteht.

15. Fahrzeugsitz, umfassend mindestens eine Verbindungsanordnung (1) nach einem der vorstehenden Ansprüche.

## Claims

1. A connecting arrangement (1) for a linkage of a vehicle seat, comprising a coupling rod (10) and a securing element (40) for securing the coupling rod (10) to a further component (20) of the vehicle seat, wherein the linkage is part of a lever mechanism for operating a component of the vehicle seat, and the further component (20) is a pivotable lever,
**characterized in that**
the coupling rod (10) is introduced into a bearing bush (30) which can be connected to the further component (20), which has a cavity (31) into which the securing element (40) is introduced.

2. The connecting arrangement (1) as claimed in claim 1, **characterized in that** the bearing bush (30) has a pot-shaped region (32).

3. The connecting arrangement (1) as claimed in claim 2, **characterized in that** the pot-shaped region (32) has an approximately rotationally symmetrical contour.

4. The connecting arrangement (1) as claimed in one of claims 2 or 3, **characterized in that** the pot-shaped region (32) largely encloses the cavity (31).

5. The connecting arrangement (1) as claimed in claim 4, **characterized in that** the bearing bush (30) has a receiving opening (37), which extends from an envelope surface of the pot-shaped region (32) as far as the cavity (31), and into which the coupling rod (10) is introduced.

6. The connecting arrangement (1) as claimed in one of claims 4 or 5, **characterized in that** an end face of the pot-shaped region (32) has an insert opening (35), into which the securing element (40) is introduced.

7. The connecting arrangement (1) as claimed in claim 6, **characterized in that** one end face of the pot-shaped region (32) is surrounded by a flange (34) which projects outwardly in the radial direction.

8. The connecting arrangement (1) as claimed in one of claims 2 to 7, **characterized in that** at least one projection (36) extending outwardly in the radial direction is disposed on an envelope surface of the pot-shaped region (32).

9. The connecting arrangement (1) as claimed in one of claims 1 to 8, **characterized in that** an external thread (12) is provided at one end region of the coupling rod (10), which projects at least partly into the cavity (31).

10. The connecting arrangement (1) as claimed in claim 9, **characterized in that** the securing element (40) has at least two teeth (42), which engage with the external thread (12).

11. The connecting arrangement (1) as claimed in claim 10, **characterized in that** precisely three teeth (42) are provided.

12. The connecting arrangement (1) as claimed in one of claims 10 or 11, **characterized in that** the teeth (42) engage with the external thread (12) by form fitting.

13. The connecting arrangement (1) as claimed in one of claims 1 to 7, **characterized in that** the coupling rod has a knurling or a toothing or grooves at an end region.

14. The connecting arrangement (1) as claimed in one of claims 1 to 12, **characterized in that** the bearing bush (30) consists of plastic.

15. A vehicle seat comprising at least one connecting arrangement (1) as claimed in one of the preceding claims.

## Revendications

1. Agencement de connexion (1) pour une tringlerie d'un siège de véhicule, comprenant une barre de liaison (10) et un élément de fixation (40) pour fixer la barre de liaison (10) à un autre composant (20) du siège de véhicule, la tringlerie étant une partie d'un mécanisme à levier pour la commande d'un composant du siège de véhicule et l'autre composant (20) étant un levier pivotant,
**caractérisé en ce que**
la barre de liaison (10) est introduite dans une douille-palier (30) pouvant être connectée à l'autre composant (20), laquelle présente une cavité (31) dans laquelle est introduit l'élément de fixation (40).

2. Agencement de connexion (1) selon la revendication 1, **caractérisé en ce que** la douille-palier (30) présente une région de type pot (32).

3. Agencement de connexion (1) selon la revendication 2, **caractérisé en ce que** la région en forme de pot (32) présente un contour approximativement à symétrie de révolution.

4. Agencement de connexion (1) selon l'une quelconque des revendications 2 ou 3, **caractérisé en ce que** la région en forme de pot (32) entoure essentiellement la cavité (31).

5. Agencement de connexion (1) selon la revendication 4, **caractérisé en ce que** la douille-palier (30) présente une ouverture de réception (37) qui s'étend depuis une surface d'enveloppe de la région en forme de pot (32) jusqu'à la cavité (31), et dans laquelle est introduite la barre de liaison (10).

6. Agencement de connexion (1) selon l'une quelconque des revendications 4 ou 5, **caractérisé en ce qu'**un côté frontal de la région en forme de pot (32) présente une ouverture d'introduction (35) dans laquelle est introduit l'élément de fixation (40).

7. Agencement de connexion (1) selon la revendication 6, **caractérisé en ce qu'**un côté frontal de la région en forme de pot (32) est entouré par une bride (34) saillant vers l'extérieur dans la direction radiale.

8. Agencement de connexion (1) selon l'une quelconque des revendications 2 à 7, **caractérisé en ce qu'**au moins une saillie (36) saillant vers l'extérieur dans la direction radiale est disposée au niveau d'une surface d'enveloppe de la région en forme de pot (32).

9. Agencement de connexion (1) selon l'une quelconque des revendications 1 à 8, **caractérisé en ce qu'**un filetage extérieur (12) est monté au niveau d'une région d'extrémité de la barre de liaison (10), lequel pénètre au moins en partie dans la cavité (31).

10. Agencement de connexion (1) selon la revendication 9, **caractérisé en ce que** l'élément de fixation (40) présente au moins deux dents (42) qui s'engagent dans le filetage extérieur (12).

11. Agencement de connexion (1) selon la revendication 10, **caractérisé en ce qu'**exactement trois dents (42) sont prévues.

12. Agencement de connexion (1) selon l'une quelconque des revendications 10 ou 11, **caractérisé en ce que** les dents (42) s'engagent par engagement par correspondance de formes dans le filetage extérieur (12).

13. Agencement de connexion (1) selon l'une quelconque des revendications 1 à 7, **caractérisé en ce que** la barre de liaison présente au niveau d'une région d'extrémité, une ondulation ou une denture ou des rainures.

14. Agencement de connexion (1) selon l'une quelconque des revendications 1 à 12, **caractérisé en ce que** la douille-palier (30) se compose de plastique.

15. Siège de véhicule comprenant au moins un agencement de connexion (1) selon l'une quelconque des revendications précédentes.
